# EUROPÄISCHE PATENTSCHRIFT

(11) **EP 0 315 806 B1**
(45) Veröffentlichungstag und Bekanntmachung des Hinweises auf die Patenterteilung: **20.01.1993**
(21) Anmeldenummer: 88117387.6
(22) Anmeldetag: 19.10.1988
(51) Int. Cl.: B64C 21/00, B64C 23/00

(54) **Verfahren und Vorrichtung zur Erzeugung eines Laminarturbulenten Grenzschichtübergang bei umströmten Körpern**
Method and device to cause the laminar-turbulent boundary layer transition on a body
Méthode et dispositif pour produire la transition laminaire-turbulente de la couche limite sur un corps

(30) Priorität: 12.11.1987 DE 3738366
(43) Veröffentlichungstag der Anmeldung: 17.05.1989
(73) Patentinhaber: DEUTSCHE FORSCHUNGSANSTALT FÜR LUFT- UND RAUMFAHRT e.V., 53111 Bonn (DE)
(72) Erfinder: Meier, Hans Ulrich, Dr. Ing. habil., D-3400 Göttingen (DE); Maier, Alois, Ing., D-3400 Göttingen (DE); de Zou, Ming, Prof., Nanjing, (CN)
(74) Vertreter: Rehberg, Elmar, Dipl.-Ing.

(56) Entgegenhaltungen:
- EP-A- 0 264 144
- DE-A- 3 210 498
- DE-A- 3 320 481
- DE-C- 3 228 939
- US-A- 3 362 663
- US-A- 4 693 201
- US-A- 4 741 498
- J. Fluid Mech. (1982), Vol. 118, pp. 187-200; "Control of laminar-instability waves using a new technique" by H.W. Liepmann and AI.

## Beschreibung

Die Erfindung geht aus von einem Verfahren zur Erzeugung eines laminar-turbulenten Grenzschichtübergangs bei umströmten Körpern gemäß dem Oberbegriff des Anspruchs 1, bei dem Störungen instationär in die Grenzschicht eingebracht werden. Es wird gleichzeitig eine Vorrichtung zur Durchführung des Verfahrens aufgezeigt.

Der Ort, an dem der laminar-turbulente Grenzschichtübergang erfolgt, ist abhängig von verschiedenen Einflußfaktoren wie:
Lauflänge der Strömung,
Reynold's Zahl und Machzahl
Druckgradient,
Wärmeübergang des umströmten Körpers,
Oberflächenrauhigkeit und
Strömungsqualität.

Bei Untersuchungen in beispielsweise Windkanälen, bei denen die Körper im Gegensatz zur Großausführung wesentlich kleiner sind, erfolgt der laminar-turbulente Grenzschichtübergang an einer Stelle des Körpers, die nicht mit derjenigen entsprechenden Stelle des Großmodells im Freiflug übereinstimmt. Da die Stelle des laminar-turbulenten Grenzschichtübergangs die Umströmung des Körpers mit beeinflußt, muß daher bei verkleinerten Körpern, also bei Modellen, der laminar-turbulente Grenzschichtübergang an einer bestimmten Stelle des Körpers erzwungen werden, um die mit dem Modell gewonnenen Ergebnisse auf die Großausführung übertragen zu können.

Auch an den Großausführungen ist es oft erwünscht, einen laminar-turbulenten Grerzschichtübergang zu erzwingen. Damit ist es möglich, beispielsweise eine laminare Ablösung zu vermeiden. Auch werden durch einen erzwungenen laminar-turbulenten Grenzschichtübergang asymmetrische Wirbelablösungen positiv beeinflußt.

Ein Verfahren gemäß dem Oberbegriff des Anspruchs 1 ist aus dem Artikel "Control of laminar-instability waves using a new technique" von H.W. Liepmann, G.L. Brown und D.M. Nosenchuck, J. Fluid Mech. (1982), vol. 118, Seiten 187 - 200 bekannt. Dort wird gezeigt, daß bei einem mit Wasser umströmten Körper, einer Platte, ein laminar-turbulenter Grenzschichtübergang erzeugt werden kann, wenn auf der Oberfläche des Körpers dünne Heizelemente aufgebracht werden und mittels dieser Heizelemente instationäre Störungen, also instationäre Wärmepulse, mit einer der Tollmien-Schlichting-Frequenz entsprechenden Frequenz, in die Strömung eingebracht werden. Vorteilhaft an diesem Verfahren ist, daß nur ein geringer Energieaufwand erforderlich ist. Nachteilig ist jedoch, daß der laminar-turbulente Grenzschichtübergang mit diesem Verfahren nur bei kleinen Geschwindigkeiten der Strömung möglich ist. Dies ist darauf zurückzuführen, daß die benötigte Frequenz der instationären Störungen mit der Geschwindigkeit der Strömung wächst, die Heizelemente jedoch nur eine relativ niedrige Grenzfrequenz besitzen. Nach Überschreiten dieser Grenzfrequenz findet keine instationäre Störung mehr statt, sondern vielmehr besitzt dann das Heizelement aufgrund seiner Trägheit eine konstante Temperatur. Die von Liepmann et al im Wasser durchgeführten Untersuchungen sind für Luftströmungen nicht repräsentativ, da der Wärmeübergang vom Heizelement zum Wasser wesentlich größer als in Luft ist und bedingt durch die geringen Strömungsgeschwindigkeiten auch die Tollmien-Schlichting-Frequenzen sehr niedrig sind.

Das heute in der Praxis übliche Verfahren zur Beeinflussung eines laminar-turbulenten Grenzschichtübergangs ist daher die Aufbringung einer Rauhigkeit auf den umströmten Körper, wie es beispielsweise in dem Artikel "Problems Associated with Artificial Boundary Layer Transition", H.U. Meier, H.-P. Kreplin, AIAA - 83 - 1673 beschrieben ist. Die notwendige Höhe der Rauhigkeit kann dabei experimentell ermittelt werden. Nachteilig ist, daß die künstliche Rauhigkeit der Oberfläche lokal einen Impulsverlust erzeugt, der stromabwärts erhalten bleibt. Der Einfluß dieses Impulsverlustes verstärkt sich beispielsweise bei verzögerter Strömung erheblich und führt zu einer Vergrößerung der Dicke der Grenzschicht. Damit entspricht zwar die Lage des laminar-turbulenten Grenzschichtübergangs an dem Modell derjenigen der Großausführung, die Grenzschichtentwicklung jedoch ist aufgrund der künstlichen Aufdickung der Grenzschicht beim Modell anders als bei der Großausführung. Weiterhin nachteilig ist, daß die Höhe und Lage der auf den Körper aufgebrachten Rauhigkeit nur für einen einzigen Anstellwinkel und eine einzige Anströmgeschwindigkeit optimiert werden kann, da sich die Lage des laminar-turbulenten Grenzschichtübergangs bei der Großausführung mit diesen Parametern ändert. Auch an der Großausführung werden an einigen Stellen Rauhigkeiten, hier Turbulenzgeneratoren, aufgebracht, um laminare Ablösungen zu vermeiden. Dies hat jedoch den Nachteil, daß die Turbulenzgeneratoren Widerstand erzeugen.

Es ist weiterhin bekannt, einen laminar-turbulenten Grenzschichtübergang durch instationäres Ausblasen in die und Absaugen aus der laminaren Grenzschicht zu erzeugen. Jedoch besteht hier der Nachteil, daß mit dem Ausblasen und Absaugen ein Grenzschichtübergang nicht immer zuverlässig hervorgerufen werden kann.

Eine Vorrichtung zur Erzeugung eines laminar-turbulenten Grenzschichtübergangs durch instationäres Ausblasen und Absaugen ist aus der EP-A-0 264 144 bekannt. Diese Vorrichtung weist mehrere in die Oberfläche des umströmten Körpers eingepaßte Störgeneratoren auf. Jeder Störgenerator ist mit einer Aussparung zum Ausblasen und Absaugen an der Oberfläche und mit einer Membran zur Erzeugung von Schall versehen. Die Membran ist unterhalb der Oberfläche des umströmten Körpers angeordnet. Der von der Membran auf die Oberfläche des umströmten Körpers von unten abgestrahlte Schall bewirkt das Ausblasen und Absaugen durch die Aussparung in der Oberfläche.

Der Erfindung liegt die Aufgabe zugrunde, ein Verfahren der eingangs beschriebenen Art so weiterzubilden, daß ein laminar-turbulenter Grenzschichtübergang unter allen Umständen sicher erzwungen werden kann.

Erfindungsgemäß wird dies durch die Merkmale des kennzeichnenden Teils des Anspruchs 1 erreicht. Es ist also vorgesehen, daß mit Hilfe verschiedener Mechanismen unterschiedliche Störungen gleichzeitig in die Grenzschicht eingebracht werden, wobei die Störungen stets instationär, also beispielsweise sinus-förmig, sind. Es hat sich herausgestellt, daß die Kombination der Mechanismen, also das gleichzeitige Ausblasen und Absaugen mit den Schwingungen der Oberfläche des Körpers beispielsweise bei zweifacher Ausnutzung von Schalldruck, besonders wirkungsvoll ist, sich der laminar-turbulente Grenzschichtübergang also bei allen Anströmgeschwindigkeiten, Strömungsbedingungen und Körpern erzielen läßt. Unter Ausblasen und Absaugen ist dabei zu verstehen, daß das den Körper umströmende Medium abgesaugt und anschließend das abgesaugte Medium gleich wieder ausgeblasen wird. Durch dieses wechselseitige Absaugen und Ausblasen wird die dadurch in die Grenzschicht eingebrachte Störung instationär. Um hohe Frequenzen der Störungen zu erreichen, wird jeweils nur eine geringe Menge des Mediums ausgeblasen und abgesaugt. Damit ist auch sichergestellt, daß der Impulsverlust der Grenzschicht vermieden bzw. sehr klein gehalten werden kann. Schwingungen der Oberfläche des Körpers bewirken keinen Impulsverlust, so daß eine künstliche Aufdickung der Grenzschicht aufgrund des erzwungenen laminar-turbulenten Grenzschichtübergangs ausgeschlossen ist. Erst damit wird es möglich, daß der Verlauf der Grenzschicht an Modellen dem der Großausführung entspricht. Weiterhin vorteilhaft sind weder das Ausblasen und Absaugen noch die Schwingungen der Oberfläche des Körpers beispielsweise bei Erregung durch Schalldruck auf niedrige Frequenzen beschränkt. Die Mechanismen können mit Frequenzen von mehreren 1000 Hz betrieben werden, ohne daß die daraus resultierenden, in die Grenzschicht eingebrachten Störungen, stationär werden. Vielmehr hat es sich gezeigt, daß auch bei hohen Frequenzen bei einer beispielsweise sinus-förmigen Anregung die Störungen in der Grenzschicht ebenfalls sinus-förmig eingebracht werden. Damit ist sichergestellt, daß der laminar-turbulente Grenzschichtübergang auch bei hohen Anströmgeschwindigkeiten durchgeführt werden kann. Natürlich kann neben einer sinus-förmigen Anregung ebenfalls eine rechteckige Anregung erfolgen. Auch andere zeitliche Verläufe der Anregungen der Störungen sind denkbar. Wichtig ist nur, daß letztendlich die Störungen in der Grenzschicht instationär sind. Ein besonderer Vorteil dieses Verfahrens besteht auch darin, daß, nachdem der laminar-turbulente Grenzschichtübergang erzwungen wird , durch einfaches Abschalten der die Störungen anregenden Mechanismen sich wieder eine laminare Grenzschicht ausbildet. Dies kann beispielsweise bei Flugzeugen benutzt werden, bei denen bei Start und Landung die Gefahr einer laminaren Grenzschichtablösung an Flügel und/oder Leitwerk auftritt, währenddessen im Reiseflug aufgrund der höheren Geschwindigkeit eine laminare Grenzschichtablösung nicht zu befürchten ist. Vielmehr ist im Reiseflug ein möglichst langes laminares Anliegen der Grenzschicht erwünscht, da eine laminare Grenzschicht einen geringeren Widerstand als eine turbulente aufweist. In solch einem Fall könnte in der Start- und Landephase der laminar-turbulente Grenzschichtübergang erzwungen werden und somit die Gefahr der laminaren Grenzschichtablösung vermieden werden, während im Reiseflug keine instationären Störungen in die Grenzschicht mehr eingebracht werden, die turbulente Grenzschicht also wieder laminar wird, und somit der Gesamtwiderstand des Flugzeuges verringert wird.

Um den laminar-turbulenten Grenzschichtübergang sicher herbeizuführen, müssen die Störungen mit einer Frequenz, die der jeweiligen Tollmien-Schlichting-Frequenz entspricht, oder einer höheren Frequenz eingebracht werden. Die Tollmien- Schlichting- Frequenz ist dabei abhängig von der jeweiligen Anströmgeschwindigkeit. Sie beträgt beispielsweise bei einer Anströmgeschwindigkeit von 20 m/Sek. etwa 600 Hz. Bei höheren Anströmgeschwindigkeiten steigt die Tollmien- Schlichting- Frequenz an. Die jeweilige Größe der Tollmien- Schlichting- Frequenz kann mit Hilfe von Oberflächenheizfilmmessungen experimentell bestimmt werden. Es ist jedoch auch möglich, eine Frequenz zu wählen, die weit oberhalb der jeweiligen Tollmien-Schlichting- Frequenz liegt, und es somit sichergestellt ist, daß der laminar-turbulente Grenzschichtübergang stattfindet. In diesem Fall ist eine experimentelle Bestimmung der jeweiligen Tollmien- Schlichting- Frequenz nicht erforderlich.

Die Größe der Störungen kann vorteilhaft steuer- oder regelbar sein. Damit ist es möglich, daß die in die Grenzschicht eingebrachten Störungen an sich ändernde Verhältnisse, wie beispielsweise die Anströmgeschwindigkeit, angepaßt werden können. Dies ist auch in Form eines Regelkreises denkbar, bei dem etwa in Abhängigkeit der Fluggeschwindigkeit eines Flugzeuges die instationären Störungen entweder in die Grenzschicht eingebracht werden oder aber nicht. Es besteht weiterhin die Möglichkeit, an bestimmten gefährdeten Stellen des Flugzeuges, also beispielsweie an Stellen der Flügel oder der Leitwerke, Sensoren vorzusehen, die das Entstehen einer laminaren Ablösung melden und aufgrund dieser Meldung an diesen Stellen die instationären Störungen entsprechend dem Verfahren in die Grenzschicht eingebracht werden.

Es ist möglich, die Störungen quasi punktweise einzubringen . Damit wird der laminar-turbulente Grenzschichtübergang nur in einem relativ eng begrenzten Bereich erzeugt, währenddessen außerhalb dieses Bereiches weiterhin eine laminare Grenzschicht vorliegt.

Es können aber auch eine Vielzahl von punktförmigen Störungen eingebracht werden, wobei die Störungen auf einer oder mehreren, in Strömungsrichtung hintereinander liegenden und senkrecht oder quer zur Anströmung des Körpers angeordneten Linien erzeugt werden. Damit wird erreicht, daß stromab der Linien über die gesamte Breite der Linien hinweg der laminar-turbulente Grenzschichtübergang erzwungen wird. Dies ist beispielsweise bei der Untersuchung von Flugzeugflügeln erwünscht, bei denen nach einer bestimmten Lauflänge der Strömung über die gesamte Spannweite des Flügels eine turbulente Grenzschicht vorhanden sein soll.

Die Vorrichtung zur Erzeugung eines laminar-turbulenten Grenzschichtübergangs bei einem umströmten Körper mit einem in die Oberfläche des Körpers eingepaßten, instationäre Störungen in die Grenzschicht einbringenden Störgenerator, wobei der Störgenerator eine oder mehrere Aussparungen zum Ausblasen und Absaugen an der Oberfläche und eine erste Membran zur Erzeugung von Schall, der durch die Aussparungen hindurchtritt, aufweist, ist erfindungsgemäß durch den kennzeichnenden Teil des Anspruchs 5 gekennzeichnet. Die Membran bzw. der von der Membran ausgesandte Schall bewirkt so das Einbringen von instationären Störungen in die Grenzschicht sowohl durch Ausblasen und Absaugen, als auch durch Schwingungen. Durch diese doppelte Wirkung des Störgenerators ist er zuverlässig zur Erzeugung des gewünschten Grenzschichtübergangs unter nahezu allen Randbedingungen geeignet.

Der Störgenerator kann eine Steuer- oder Regeleinrichtung aufweisen. Damit ist es möglich, sowohl die Größe als auch die Frequenz der in die Grenzschicht eingebrachten Störungen zu beeinflußen. Auch kann mit dieser Steuer- oder Regeleinrichtung in Abhängigkeit von der jeweils vorliegenden Strömung der Störgenerator derart beeinflußt werden, daß er keine Störungen mehr in die Grenzschicht einbringt bzw. wieder seine Funktion aufnimmt und Störungen in die Grenzschicht einbringt.

Der ersten Membran kann ein permanenter Ringmagnet, ein Elektromagnet und ein Gehäuse zugeordnet sein und die Anregung der ersten Membran kann dann nach dem Prinzip eines Lautsprechers erfolgen. Es besteht auch die Möglichkeit die erste Membran durch andere Lautsprechersysteme anzuregen. Durch eine solche Ausbildung des Störgenerators wird sichergestellt, daß der Störgenerator einen einfachen, leicht zu fertigenden und damit kostengünstigen Aufbau besitzt. Auch kann der Störgenerator sehr klein gebaut werden, so daß die von dem Störgenerator ausgehenden Störungen quasi punktweise eingebracht werden. Eine Beschädigung der Oberfläche des Körpers ist nur an wenigen Stellen, die zumal in ihrer Ausdehnung sehr klein gehalten werden können, erforderlich. Der besondere Vorteil des Störgenerators ist auch darin zu sehen, daß zur Anregung der Störungen nur eine sehr geringe Energie aufgewendet werden muß. Die erste Membran wird, wie es bei Lautsprechern bekannt ist, angeregt und erzeugt somit Schall. Dieser Schall überträgt sich einerseits auf die zweite Membran, die dadurch in Schwingungen versetzt wird. Andererseits wird der Schall durch die Aussparungen der zweiten Membran in die Grenzschicht eingebracht, wo er dann als Ausblasen und Absaugen wirkt. Zwischen der ersten Membran und der zweiten Membran ist das Luftpolster angeordnet, welches den Schall überträgt.

Die Erfindung wird anhand von bevorzugten Aussführungsbeispielen weiter beschrieben. Es zeigen:
- Fig. 1: eine schematische Darstellung eines Störgenerators,
- Fig. 2: eine perspektivische Darstellung eines umströmten Körpers mit einem Störgenerator und
- Fig. 3: eine perspektivische Darstellung eines umströmten Körpers mit mehreren Störgeneratoren.

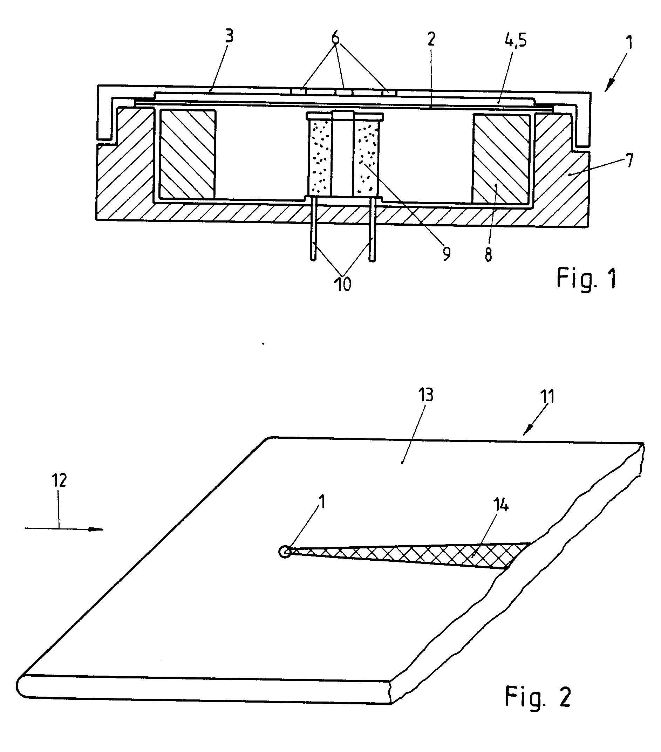

In Fig. 1 ist ein Störgenerator 1 dargestellt. Der Störgenerator 1 besitzt eine erste Membran 2 und eine zweite Membran 3. Die erste Membran 2 wird von der zweiten Membran 3 vollständig abgedeckt. Zwischen der ersten Membran 2 und der Zeiten Membran 3 befindet sich ein Freiraum 4, in dem ein Luftpolster 5 eingeschlossen ist. In der zweiten Membran 3 sind Aussparungen 6 vorgesehen, durch die das Luftpolster 5 oder Teile davon durchtreten können. Die erste Membran 2 und die zweite Membran 3 sind mit einem Gehäuse 7 verbunden, welches einen permanenten Ringmagneten 8 und einen Elektromagneten 9 aufweist. An dem Elektromagneten 9 sind elektrische Anschlüsse 10 angeordnet, die zu einer hier nicht weiter dargestellten Stromversorgungseinheit führen.

Über die elektrischen Anschlüsse 10 wird der Elektromagnet 9 derart angeregt, so daß die erste Membran 2 in Schallschwingungen versetzt wird. Das sich in dem Freiraum 4 befindliche Luftpolster 5 wird durch die Schallschwingungen der ersten Membran 2 durch die Aussparungen 6 der zweiten Membran 3 ausgeblasen und wieder angesaugt. Die Schwingungen der ersten Membran 2 übertragen sich über das Luftpolster 5 aber auch auf die zweite Membran 3, die damit ebenfalls in Schwingungen versetzt wird. Mit Hilfe der hier nicht dargestellten Versorgungseinheit können die Frequenz und die Amplitude der Schwingungen eingestellt werden. Der Störgenerator 1 wird zweckmäßigerweise mit einer Steuer- oder Regeleinrichtung gekoppelt, die in Abhängigkeit von den jeweils vorliegenden Strömungsbedingungen den Störgenerator 1 aktiviert oder deaktiviert und auch die Frequenz und Amplitude der ersten Membran 2 regelt. Als Regelgröße wird dabei der jeweilige Zustand der Strömung kurz stromab hinter dem Störgenerator verwendet.

Fig. 2 zeigt eine schematische Ansicht eines Körpers 11, der von einem Medium in Richtung eines Pfeils 12 umströmt wird. Auf dem Körper 11 ist der Störgenerator 1 angeordnet. Der Störgenerator 1 ist in dem Körper 11 derart eingelassen, daß der Störgenerator 1 mit einer Oberfläche 13 des Körpers 11 plan abschließt. Nach der Aktivierung des Störgenerators 1 findet ein laminar-turbulenter Grenzschichtübergang in einem Bereich 14 statt. Der Bereich 14 hat die Form eines spitzen Dreiecks, wobei die Spitze des Dreiecks in etwa mit dem Mittelpunkt des Störgenerators 1 übereinstimmt. Außerhalb des Bereiches 14 bleibt die Grenzschicht von dem Störgenerator 1 unbeeinflußt und somit laminar Die Frequenz, mit der der Störgenerator 1 die Störungen in die Grenzschicht einbringt, entspricht in etwa der Tollmien- Schlichting- Frequenz. Es ist jedoch auch möglich eine höhere Frequenz zu wählen.

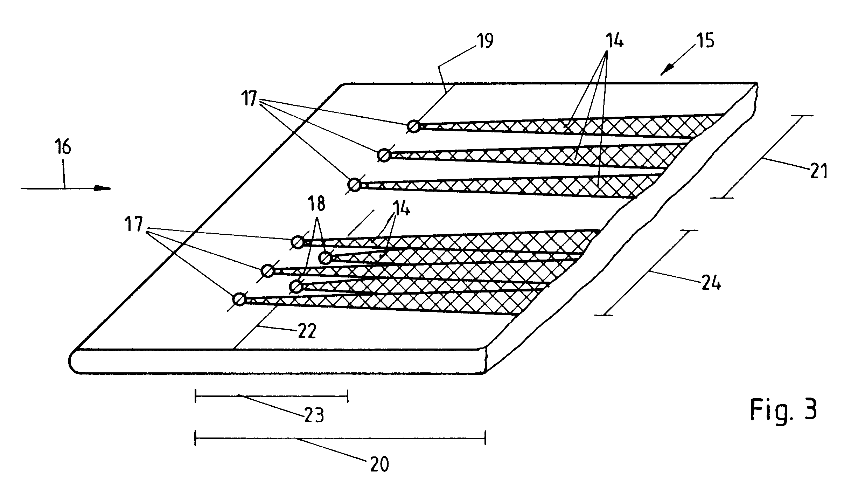

Fig. 3 zeigt einen Körper 15, der in Richtung eines Pfeils 16 angeströmt wird. Auf dem Körper 15 sind mehrere Störgeneratoren 17 und 18 angeordnet. Im oberen Teil der Fig. 3 sind die Störgeneratoren 17 auf einer Linie 19, die senkrecht oder quer zur Anströmung verläuft, angeordnet. Jedes Störgenerator bewirkt nun wieder in dem Bereich 14 den laminar-turbulenten Grenzschichtübergang, wobei es nach einer bestimmten Lauflänge 20 zur Überlagerung kommt. In diesem Fall hat der laminar-turbulente Grenzschichtübergang sich auf eine spannweitige Erstreckung 21 ausgedehnt. Im unteren Teil der Fig. 3 sind neben den auf der Linie 19 angeordneten Störgeneratoren 17 noch auf einer weiteren Linie 22 die Störgeneratoren 18 angeordnet. Die Störgeneratoren 18 liegen dabei in Strömungsrichtung hinter den Störgeneratoren 17 und sind versetzt zu denen angeordnet. Die Bereiche 14 der Störgeneratoren 17 und 18 überschneiden sich nach einer Lauflänge 23, die wesentlich kürzer als die Lauflänge 20 ist. Somit ist es möglich durch Anordnung der Störgeneratoren 17 und 18 auf den zwei Linien 19 und 22 nach der relativ kurzen Lauflänge 23 über eine spannweitige Erstreckung 24 den laminar-turbulenten Grenzschichtübergang zu erzeugen. Diese Anordnung wird vorzugsweise dann benutzt werden, wenn beispielsweise bei Profilmessung über die gesamte Spannweite eine turbulente Grenzschicht erwünscht ist.

### Bezugszeichenliste:

- 1 =: Störgenerator
- 2 =: erste Membran
- 3 =: zweite Membran
- 4 =: Freiraum
- 5 =: Luftpolster
- 6 =: Aussparung
- 7 =: Gehäuse
- 8 =: permanenter Ringmagnet
- 9 =: Elektromagnet
- 10 =: elektrische Anschlüsse
- 11 =: Körper
- 12 =: Pfeil
- 13 =: Oberfläche
- 14 =: Bereich
- 15 =: Körper
- 16 =: Pfeil
- 17 =: Störgenerator
- 18 =: Störgenerator
- 19 =: Linie
- 20 =: Lauflänge
- 21 =: Erstreckung
- 22 =: Linie
- 23 =: Lauflänge
- 24 =: Erstreckung

## Patentansprüche

1. Verfahren zur Erzeugung eines laminar-turbulenten Grenzschichtübergangs bei einem umströmten Körper (11) an festlegbaren Punkten auf dessen Oberfläche (13), wobei instationäre Störungen an den festlegbaren Punkten in die Grenzschicht eingebracht werden und wobei die Störungen jeweils mit einer etwa der Tollmien-Schlichting-Frequenz entsprechenden Frequenz hervorgerufen werden, dadurch gekennzeichnet, daß die instationären Störungen durch Schwingungen der Oberfläche (13) und gleichzeitig durch Ausblasen und Absaugen an den festlegbaren Punkten in die Grenzschicht eingebracht werden und daß die Störungen auch mit einer Frequenz größer als die Tollmien-Schlichting-Frequenz hervorgerufen werden.

2. Verfahren nach Anspruch 1, dadurch gekennzeichnet, daß die Größe der Störungen steuer- oder regelbar ist.

3. Verfahren nach Anspruch 1, dadurch gekennzeichnet, daß an einer Vielzahl von Punkten Störungen eingebracht werden, und daS die Störungen entlang einer festlegbaren, senkrecht oder quer zur Anströmung des Körpers (11, 15) angeordneten Linie (19) hervorgerufen werden.

4. Verfahren nach Anspruch 3, dadurch gekennzeichnet, daß die Störungen entlang mehrerer festlegbarer, in Strömungsrichtung hintereinander liegenden Linien (19, 22) hervorgerufen werden.

5. Vorrichtung zur Erzeugung eines laminar-turbulenten Grenzschichtübergangs bei einem umströmten Körper mit einem in die Oberfläche (13) des Körpers (11, 15) eingepaßten, instationäre Störungen in die Grenzschicht einbringenden Störgenerator (1, 17, 18), wobei der Störgenerator (1, 17, 18) ein oder mehrere Aussparungen (6) zum Ausblasen und Absaugen an der Oberfläche (13) und eine erste Membran (2) zur Erzeugung von Schall, der durch die Aussparungen hindurchtritt, aufweist, dadurch gekennzeichnet, daß am Störgenerator (1, 17, 18) eine zweite Membran (3) vorgesehen ist, daß die zweite Membran (3) die Oberfläche (13) des Störgenerators (1, 17, 18) bildet und die Aussparungen (6) aufweist, daß zwischen der ersten Membran (2) und der zweiten Membran (3) ein Luftpolster (5) angeordnet ist und daß die erste und zweite Membran (2, 3) derart ausgebildet und zueinander angeordnet sind, daß der von der ersten Membran (2) erzeugte Schall die zweite Membran (3) in Schwingungen versetzt, wobei die Frequenz des Schalls der Tollmien-Schlichting-Frequenz entspricht oder größer ist.

6. Vorrichtung nach Anspruch 5, dadurch gekennzeichnet, daß der Störgenerator (1, 17, 18) eine Steuer- oder Regeleinrichtung aufweist.

7. Vorrichtung nach einem der Ansprüche 5 und 6, dadurch gekennzeichnet, daß der ersten Membran (2) ein permanenter Ringmagnet (8), ein Elektromagnet (9) und ein Gehäuse (7) zugeordnet sind, und daß die Anregung der ersten Membran (2) nach dem Prinzip eines Lautsprechers erfolgt.

## Claims

1. Process for generating a laminar-turbulent boundary layer transition in the case of a circumcirculated body (11) at determinable points on its surface (13), non-steady disturbances being introduced into the boundary layer at the determinable points and the disturbances being generated in each instance with a frequency approximately corresponding to the Tollmien-Schlichting frequency, characterised in that the non-steady disturbances are introduced into the boundary layer by oscillations of the surface (13) and simultaneously by blowing out and suction at the determinable points, and in that the disturbances are also generated with a frequency greater than the Tollmien-Schlichting frequency.

2. Process according to Claim 1, characterised in that the magnitude of the disturbances is controllable or regulable.

3. Process according to Claim 1, characterised in that disturbances are introduced at a multiplicity of points, and in that the disturbances are generated along a determinable line (19) disposed perpendicular or transversely to the incident flow of the body (11, 15).

4. Process according to Claim 3, characterised in that the disturbances are generated along a plurality of determinable lines (19, 22) situated one behind the other in the direction of flow.

5. Device for generating a laminar-turbulent boundary layer transition in the case of a circumcirculated body with a disturbance generator (1, 17, 18) which is fitted into the surface (13) of the body (11, 15) and which introduces non-steady disturbances into the boundary layer, the disturbance generator (1, 17, 18) exhibiting one or more recesses (6) for blowing out and suction at the surface (13) and a first membrane (2) for the generation of sound which passes through the recesses, characterised in that a second membrane (3) is provided at the disturbance generator (1, 17, 18), in that the second membrane (3) forms the surface (13) of the disturbance generator (1, 17, 18) and exhibits the recesses (6), in that a cushion of air (5) is disposed between the first membrane (2) and the second membrane (3), and in that the first and second membrane (2, 3) are designed and disposed relative to one another in such a manner that the sound generated by the first membrane (2) sets the second membrane (3) into oscillations, the frequency of the sound corresponding to or being greater than the Tollmien-Schlichting frequency.

6. Device according to Claim 5, characterised in that the disturbance generator (1, 17, 18) exhibits a control device or regulating device.

7. Device according to one of Claims 5 and 6, characterised in that a permanent ring magnet (8), an electromagnet (9) and a housing (7) are associated with the first membrane (2), and in that the excitation of the first membrane (2) takes place in accordance with the principle of a loud speaker.

## Revendications

1. Procédé pour produire une transition laminaire-turbulente de la couche limite sur un corps (11) placé dans un écoulement, en des points définissables sur sa surface (13), dans laquelle des perturbations non-stationnaires sont introduites dans la couche limite et dans laquelle les perturbations sont toujours provoquées à une fréquence correspondant approximativement à la fréquence de TOLLMIEN-SCHLICHTING,
**caractérisé** en ce que les perturbations non-stationnaires sont introduites dans la couche limite par des vibrations de la surface (13) et simultanément par soufflage et aspiration aux points définissables, et en ce que les perturbations sont aussi provoquées à une fréquence plus élevée que la fréquence de TOLLMIEN-SCHLICHTING.

2. Procédé selon la revendication 1, caractérisé en ce que la grandeur des perturbations peut être commandée ou régulée.

3. Procédé selon la revendication 1, caractérisé en ce que des perturbations sont introduites en une multiplicité de points, et en ce que les perturbations sont provoquées le long d'une ligne (19) définissable, disposée perpendiculairement ou transversalement au sens de l'écoulement sur le corps (11, 15).

4. Procédé selon la revendication 3, caractérisé en ce que les perturbations sont provoquées le long de plusieurs lignes (19, 22) définissables, situées à la suite les unes des autres dans le sens de l'écoulement.

5. Dispositif pour produire une transition laminaire-turbulente de la couche limite sur un corps placé dans un écoulement, avec un générateur de perturbations (1, 17, 18) introduisant dans la surface (13) du corps (11, 15) des perturbations non-stationnaires adaptées dans la couche limite, dans lequel le générateur de perturbations (1, 17, 18) présente une ou plusieurs ouvertures (6) pour le soufflage et l'aspiration sur la surface (13) et une première membrane (2) pour la production de son passant par les ouvertures,
**caractérisé** en ce qu'il est prévu sur le générateur de perturbations (1, 17, 18) une deuxième membrane (3), en ce que la deuxième membrane (3) constitue la surface (13) du générateur de perturbations (1, 17, 18) et présente les ouvertures (6), en ce qu'un coussin d'air (5) est disposé entre la première membrane (2) et la deuxième membrane (3), et en ce que la première et la deuxième membranes (2, 3) sont telles et sont disposées l'une par rapport à l'autre de telle sorte que le son produit par la première membrane (2) met en vibration la deuxième membrane (3), la fréquence du son correspondant à la fréquence de TOLLMIEN-SCHLICHTING ou étant supérieure à celle-ci.

6. Dispositif selon la revendication 5, caractérisé en ce que le générateur de perturbations (1, 17, 18) présente un dispositif de commande ou de régulation.

7. Dispositif selon une des revendications 5 et 6, caractérisé en ce qu'à la première membrane (2) sont associés un aimant permanent annulaire (8), un électro-aimant (9) et un boîtier (7), et que l'excitation de la première membrane (2) a lieu selon le principe d'un haut-parleur.
